# EUROPEAN PATENT APPLICATION

(11) **EP 2 357 856 A1**
(43) Date of publication of application: **17.08.2011**
(21) Application number: 11001151.7
(22) Date of filing: 11.02.2011
(51) Int. Cl.: H04W 4/08

(54) **Method of handling proximity indication and related communication device**

(30) Priority: 12.02.2010 US 303677 P; 10.02.2011 US 25091
(71) Applicant: HTC Corporation, Taoyuan County 330 (TW)
(72) Inventor: Tiwari, Kundan, Taoyuan City Taoyuan County 330 (TW)
(74) Representative: Klang, Alexander H.

(57) **Abstract**

A method of handling a proximity indication for a mobile device in a wireless communication system is disclosed. The method comprises the steps of entering a proximity of a CSG (closed subscriber group) cell, reporting an entering proximity indication to a network and starting a specified timer; and sending a leaving proximity indication whenever the mobile device leaves the proximity of the CSG cell even the specified timer is running.

## Description

### Cross Reference To Related Applications

This application claims the benefit of U.S. Provisional Application No. 61/303,677, filed on Feb 12, 2010 and entitled "Method to handle Proximity Indication in Mobility case" the contents of which are incorporated herein.

### Background of the Invention

### 1. Field of the Invention

A method used in a wireless communication system and related communication device are provided, and more particularly to, a method for handling a proximity indication in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

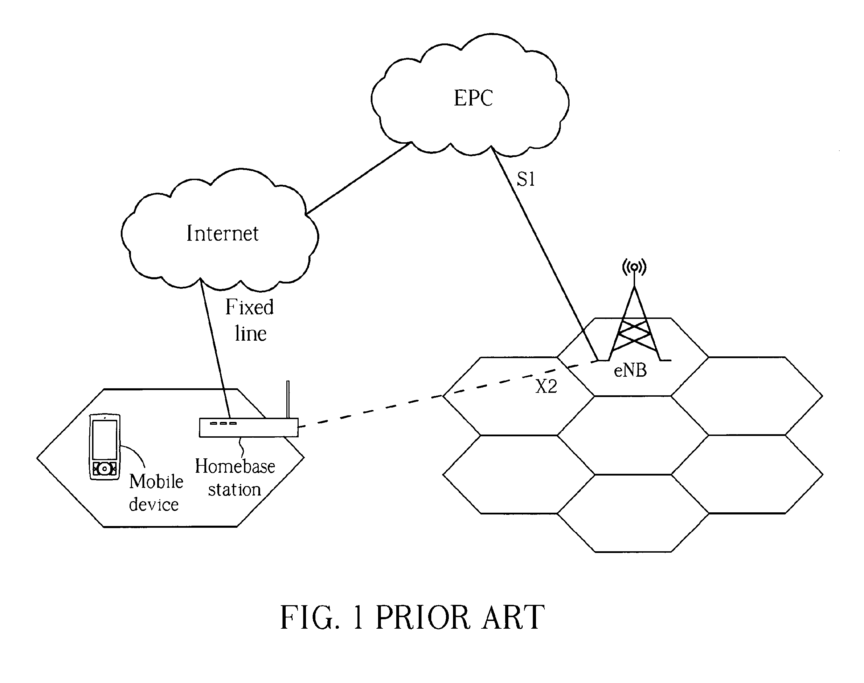

In the LTE system, a home base station, sometimes called a femto base station or a pico base station, is considered to be a promising solution for many issues in mobile communication networks, such as coverage, capacity, and cost. The home base station delivers a great user experience in homes, office buildings or schools, at very low cost, using customer's broadband access (e.g. digital subscriber line (DSL) or cable television backhaul). For this application, the home base station usually serves small cellular coverage that has a restricted group of users and only allows access and provides service to the restricted group of users, which can be referred as to a close subscriber group (CSG). Such cells providing the small cellular coverage are referred to as femto-cells, Home Node B (HNB) cells, Home e-Node B (HeNB) cells or, most commonly, CSG cells. A deployment scenario of the typical home base station involving the E-UTRAN is illustrated in FIG.1. The home base station interconnects with the LTE Evolved Packet Core (EPC) over a fixed-line broadband access network. Similar to the eNBs, the home base station is also connected via the S1 interface to the EPC. In addition, the home base stations and eNBs may be interconnected with each other via the X2 interface. A mobile device receives radio signals from the home base station.

The CSG cell is accessible only for a limited set of UEs (i.e. closed subscriber group). In order to prevent a UE from attempting to register on a CSG cell on which they do not have access, the UE maintains an allowed CSG list, i.e. a list of CSG identities (ids) for which access has been granted to the UE. The CSG id is an identifier broadcast by the CSG cell or cells and used by the UE to facilitate access for authorized members of the associated closed subscriber group.

Handover to HNB/HeNB is different from the normal handover procedure. In one scenario, the UE may provide to a source eNB a proximity indication when the UE is near a CSG or hybrid cell whose CSG id is in the UE's CSG white list. The proximity indication is used to indicate that the UE is entering or leaving the proximity of one or more cells whose CSG ids are in the UE's CSG white list and includes radio access technology (RAT) and frequency of the CSG cell. Then, the source eNB may determine whether to perform other actions related to handover to HNBs/HeNBs based on the received proximity indication. For example, the source eNB may not configure the UE to acquire system information of the HNBs/HeNBs unless it has received the proximity indication.

If a measurement configuration is not present for the concerned frequency/RAT the source eNB configures the UE with relevant measurement configuration including measurement gaps as needed, so that the UE can perform measurements on the reported RAT and frequency. The network may also use the proximity indication to minimize the requesting of handover preparation information of CSG/hybrid cells by avoiding requesting such information when the UE is not in the geographical area where cells whose CSG IDs are in the UEs CSG White-list are located.

According to Agreed CR R2-100802, UE will not send proximity indication for certain period to avoid consecutive entering/leaving proximity indications regarding same Frequency/RAT. In the current agreement it is not mentioned what action UE will take when some event (entering/leaving) happened during specified time.

When UE enters CSG proximity and sends proximity indications with event entering to network. UE leaves CSG Cell coverage within the specified time. If UE doesn't report leaving event to network after specified time then network may continue the handover procedure as network may not be aware that UE is out of CSG cell coverage. This may lead to a handover failure as UE is out of CSG proximity.

UE enters CSG proximity for Frequency/RAT and sends proximity indications with type event entering. Network will configure measurement gaps to read system information (SI) in a measurement control message. UE leaves proximity of the current Frequency/RAT and enters other Frequency/RAT within specified time. The UE will report proximity indication of new Frequency/RAT and will not report leaving event for previous frequency/RAT as the specified timer is still running. The network will continue with the current handover procedure and will not release the measurement gaps. If the network has resource problem for further assigning measurement gasp then network will not configure autonomous gap for the second Frequency/RAT. The network will continue the handover procedure on old Frequency/RAT and will not initiate the handover procedure for new frequency/RAT. This will lead to a handover failure or drop call.

### Summary of the Invention

A method of handling a proximity indication for a mobile device in a wireless communication system is disclosed to reduce singaling between a mobile device and a network.

A method of handling a proximity indication for a mobile device in a wireless communication system is disclosed. The method comprises the steps of entering a proximity of a CSG (closed subscriber group) cell, reporting an entering proximity indication to a network and starting a specified timer; and sending a leaving proximity indication whenever the mobile device leaves the proximity of the CSG cell when the specified timer is running.

A communication device for handling a proximity indication in a wireless communication system is disclosed. The communication device comprises means for entering a proximity of a CSG cell, reporting an entering proximity indication to a network and starting a specified timer; and means for sending a leaving proximity indication whenever the communication device leaves the proximity of the CSG cell when the specified timer is running.

A method of handling a proximity indication for a mobile device in a wireless communication system is disclosed. The method comprises storing an event which occurs when a specific timer is running; and sending the stored event to a network after the specific timer expires.

A communication device for handling a proximity indication in a wireless communication system is disclosed. The communication device comprises storing an event which occurs when a specific timer is running; and sending the stored event to a network after the specific timer expires.

These and other objectives of the present invention will no doubt become obvious to those of ordinary skill in the art after reading the following detailed description of the preferred embodiment that is illustrated in the various figures and drawings.

### Brief Description of the Drawings

FIG.1 illustrates a deployment scenario of a home base station according to an example.

FIG.2 illustrates a schematic diagram of a wireless communication system according to an example.

FIG.3 illustrates a schematic diagram of a communication device according to an example.

FIG.4 illustrates a schematic diagram of the program code according to FIG.3.

FIG.5 is a flowchart of a process according to an example.

FIG.6 is a flowchart of a process according to an example.

### Detailed Description

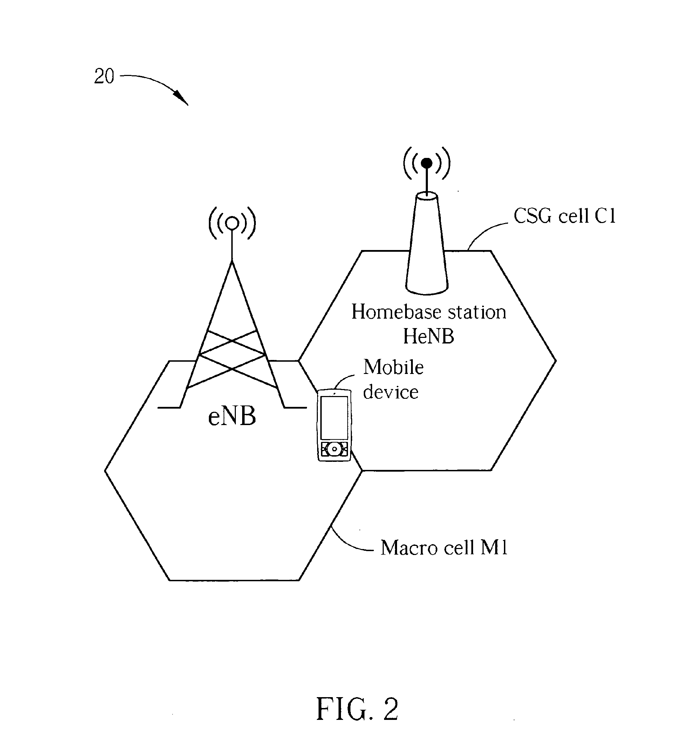

Please refer to FIG.2, which illustrates a schematic diagram of a wireless communication system 20 according to an example. Briefly, the wireless communication system 20 is composed of a network and a plurality of mobile devices (only one is shown in FIG.2). The wireless communication system 20 can be a UMTS (Universal Mobile Telecommunications System), an LTE (long-term evolution) system or any other similar network system. In the LTE system, the network can be referred as a EUTRAN (evolved-UTRAN) comprising a plurality of eNBs (only one is shown in FIG.2), and a plurality of home base stations (only one is shown in FIG.2), whereas the mobile devices are referred as to user equipments (UEs). In Fig. 2, the eNB may serve a Macro cell M1. Within the Macro cell M1 are a CSG cell 1 associated with a home base station BS1 and a CSG cell 2 associated with a home base station BS2. The UEs can be devices such as mobile phones, computer systems, etc. This terminology will be used throughout the application for ease of reference, however, this should not be construed as limiting the disclosure to any one particular type of network. In some examples, the network and the UE may be seen as a transmitter or receiver according to transmission direction, e.g., for uplink (UL), the UE is the transmitter and the network is the receiver, and for downlink (DL), the network is the transmitter and the UE is the receiver.

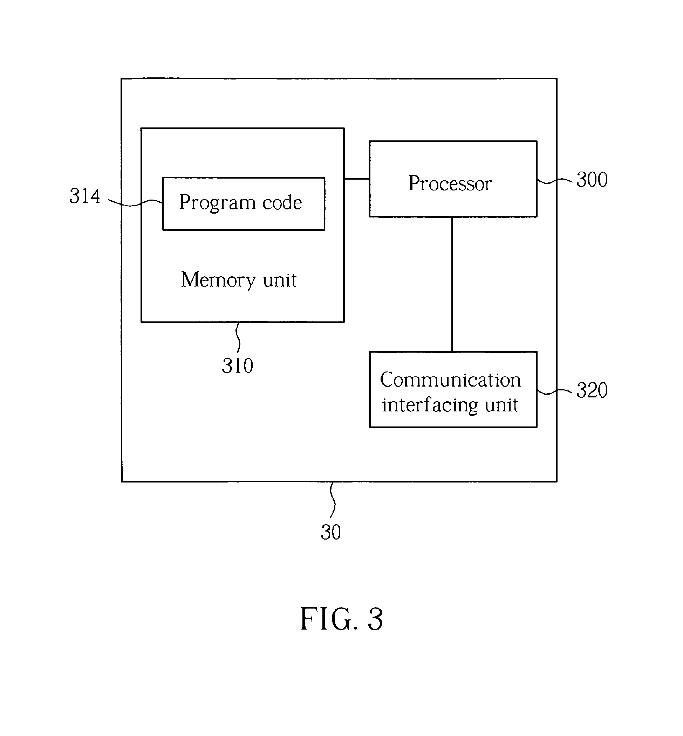

Please refer to FIG.3, which illustrates a schematic diagram of a communication device 30 according to an example. The communication device 30 may be the mobile devices or the network shown in FIG. 2 and may include a processor 300 such as a microprocessor or ASIC, a memory unit 310 and a communication interfacing unit 320. The memory unit 310 may be any data storage device that can store program code 314 for access by the processor 300. Examples of the memory unit 310 include but are not limited to a subscriber identity module (SIM), read-only memory (ROM), random-access memory (RAM), CD-ROMs, magnetic tapes, hard disks, and optical data storage devices. The communication interfacing unit 320 may be a radio transceiver and accordingly exchanges wireless signals according to processing results of the processor 300.

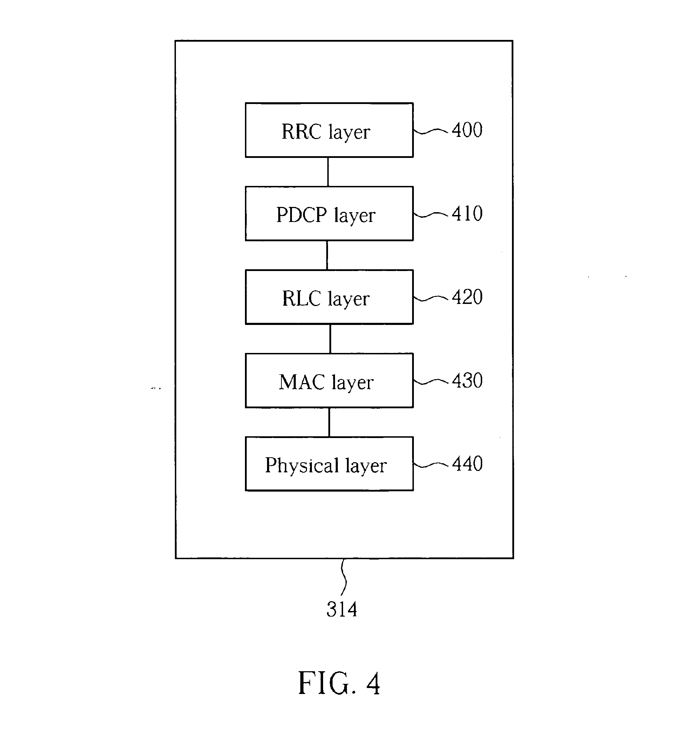

Please refer to FIG.4, which illustrates a schematic diagram of the program code 314 for the LTE system according to an example. The program code 314 includes program code of multiple communications protocol layers, which from top to bottom are a radio resource control (RRC) layer 400, a packet data convergence protocol (PDCP) layer 410, a radio link control (RLC) layer 420, a medium access control (MAC) layer 430 and a physical (PHY) layer 440.

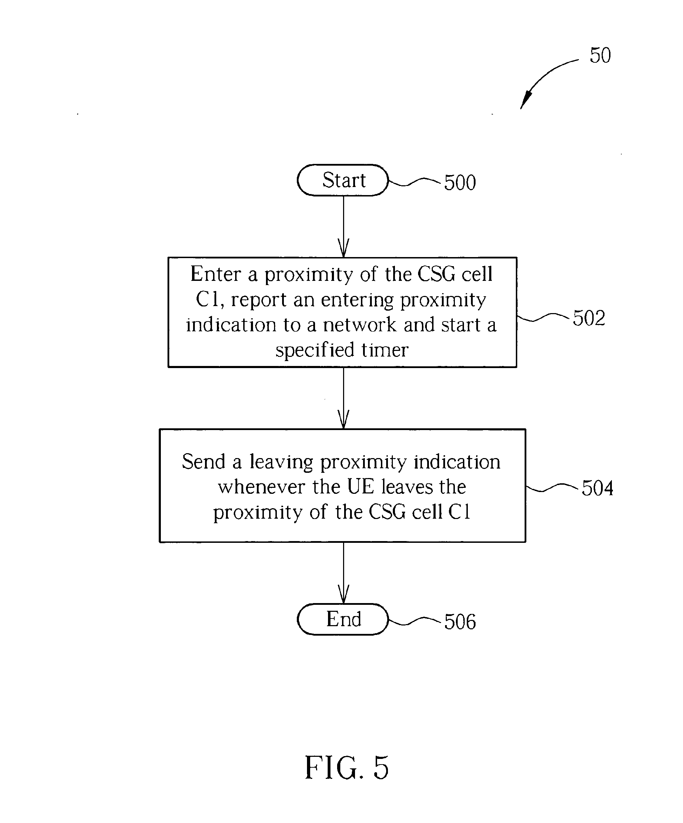

Mobility from eNB to HeNB's CSG/hybrid cell takes place with a S1 handover procedure. The UE may send an entering proximity indication when the UE determines it may be near the cells whose CSG identity (id) is in the UE's CSG white list. The UE may send a leaving proximity indication when the UE is not in the geographical area where the CSG cells are located. Please refer to FIG.5, which is a flowchart of an exemplary process 50. The process 50 is used for handling a proximity indication for a UE in a wireless communication system (e.g. wireless communication system 20). The UE may be referred as to the communication device 30 shown in FIG.3. It may travel along the boundary between the CSG cell C1 and the macro cell M1. The process 50 may be compiled into the program code 314 and include the following steps:

Step 500: Start.

Step 502: Enter a proximity of the CSG cell C1, report an entering proximity indication to a network and start a specified timer.

Step 504: Send a leaving proximity indication whenever the UE leaves the proximity of the CSG cell C1 and the specified timer is running.

Step 506: End.

According to the process 50, the UE may enter the proximity of the CSG cell C1, send the entering proximity indication to a network and start the specified timer in the first place. It is likely that the UE hovers between the macro cell M1 and CSG cell C1. The UE sends the leaving proximity indication whenever the UE leaves the proximity of the CSG cell C1 even though the specified timer is still running. In other words, the UE report the leaving event to a network (e.g. HeNB) every time it is out of the coverage of the CSG cell C1. Such that, the network (e.g. HeNB) may be notified that the UE is leaving the proximity of the CSG cell C1 and the network (e.g. HeNB) releases the configured measurement gaps. This may reduce power consumption and resource wasting since the UE is no longer in the coverage of the CSG cell C1.

Since the UE may hover between the macro cell M1 and CSG cell C1, it is likely that UE has entered and left the proximity of the CSG cell C1 back and forth. The UE may start a proximity timer when the mobile device re-enters the proximity of the CSG cell C1. When the proximity timer is running, the UE does not send an entering proximity indication. This, therefore, may avoid consecutively sending the entering proximity indication to the network (e.g. HeNB).

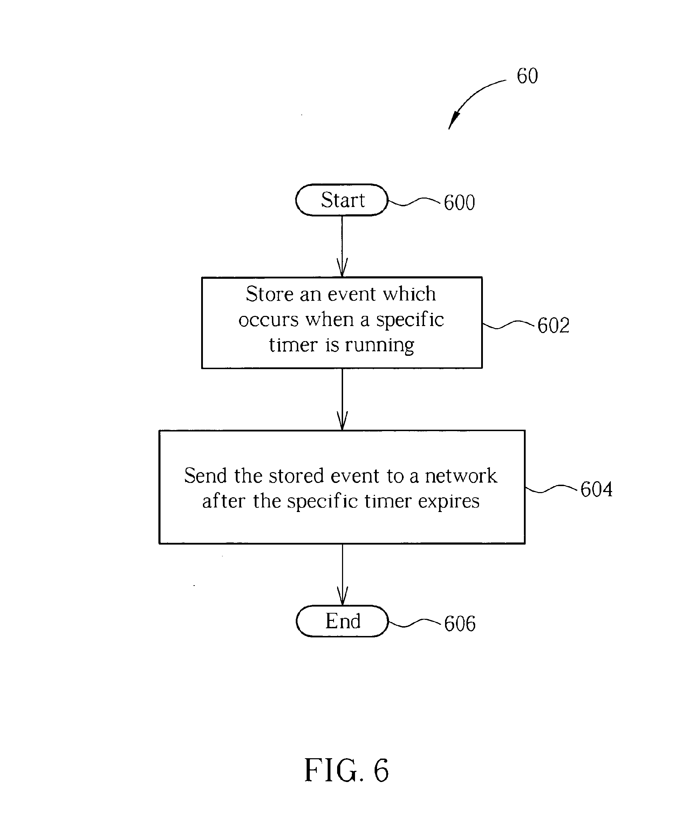

Please refer to FIG.6, which is a flowchart of an exemplary process 60. The process 60 is used for handling a proximity indication for the UE in a wireless communication system (e.g. wireless communication system 20). The UE may be referred as to the communication device 30 shown in FIG.3. It may travel along the boundary between the CSG cell C1 and the macro cell M1. The process 60 may be compiled into the program code 314 and include the following steps:

Step 600: Start.

Step 602: Store an event which occurs when a specific timer is running.

Step 604: Send the stored event to a network after the specific timer expires.

Step 606: End.

According to the process 60, the even (leaving or entering) may happen anytime when the specific timer is running. The specific timer is activated when the UE enters the proximity of the CSG C1. During the time that specific timer is running, the UE may not be able to send any proximity indication so the UE stores the event first. After the specific timer expires, the UE send the event to the network (e.g. HeNB). As a result, the network (e.g. HeNB) knows any event which occurs when the specific timer is running and may take actions according to the event reported.

To sum up, when the UE performs mobility from eNB to HeNB, the UE sends a leaving proximity indication whenever the UE leaves the proximity of the CSG cell. In this way, the network knows about the leaving event and releases the configured measurement. In another example, the UE stores the event which occurs when the specific timer is running. After the specific timer expires, the UE sends the stored event to the network. So the network knows the events occurred during the time that the specific timer is running and takes action according to the events reported.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a proximity indication for a mobile device in a wireless communication system, the method comprising:
entering a proximity of a CSG (closed subscriber group) cell, reporting an
entering proximity indication to a network and starting a specified timer; and
sending a leaving proximity indication whenever the mobile device leaves
the proximity of the CSG cell when the specified timer is running.

2. The method of claim 1 further comprising:
not sending an entering proximity indication when the proximity timer is
running.

3. A communication device for handling a proximity indication in a wireless communication system, the communication device comprising:
means for entering a proximity of a CSG (closed subscriber group) cell,
reporting an entering proximity indication to a network and starting a specified timer and
means for sending a leaving proximity indication whenever the
communication device leaves the proximity of the CSG cell when the specified timer is running.

4. The communication device of claim 3 further comprising:
means for not sending an entering proximity indication when the proximity
timer is running.

5. A method of handling a proximity indication for a mobile device in a wireless communication system, the method comprising:
storing an event which occurs when a specific timer is running; and
sending the stored event to a network after the specific timer expires.

6. The method of claim 5, wherein the specific timer is activated when the mobile device enters proximity of a CSG (closed subscriber group) cell.

7. A communication device for handling a proximity indication in a wireless communication system, the communication device comprising:
means for storing an event which occurs when a specific timer is running;
and
means for sending the stored event to a network after the specific timer
expires.

8. The communication device of claim 7, wherein the specific timer is activated when the communication device enters proximity of a CSG (closed subscriber group) cell.
